(19) Europäisches Patentamt / European Patent Office / Office européen des brevets

(11) EP 4 512 837 A1

(12) # EUROPEAN PATENT APPLICATION
published in accordance with Art. 153(4) EPC

(43) Date of publication:
**26.02.2025 Bulletin 2025/09**

(21) Application number: **23807581.6**

(22) Date of filing: **12.05.2023**

(51) International Patent Classification (IPC):
***C08F 290/06*** *(2006.01)*

(52) Cooperative Patent Classification (CPC):
**C08F 290/06**

(86) International application number:
**PCT/JP2023/017982**

(87) International publication number:
**WO 2023/223979 (23.11.2023 Gazette 2023/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.05.2022 JP 2022082223**

(71) Applicant: **Resonac Corporation**
**Tokyo 105-7325 (JP)**

(72) Inventors:
- **FURUKAWA Naoki**
  **Tokyo 105-7325 (JP)**
- **NAKAMURA Yuki**
  **Tokyo 105-7325 (JP)**
- **MASUDA Kiyoto**
  **Tokyo 105-7325 (JP)**
- **YOKOTA Hiroshi**
  **Tokyo 105-7325 (JP)**

(74) Representative: **Berggren Oy**
**P.O. Box 16**
**Eteläinen Rautatiekatu 10A**
**00101 Helsinki (FI)**

(54) **COMPOSITION THAT CONTAINS COMPOUND HAVING POLYOXYALKYLENE CHAIN AND ACRYLIC COPOLYMER**

(57) A composition containing a compound represented by the following Formula (1):

[Chemical Formula 1]

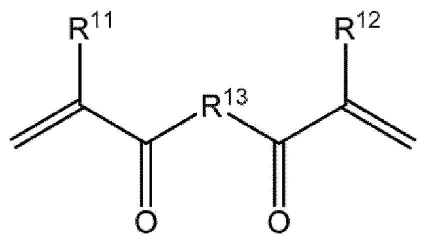

(1)

[in the Formula (1), $R^{11}$ and $R^{12}$ each independently represent a hydrogen atom or a methyl group; and $R^{13}$ represents a divalent group having a polyoxyalkylene chain]; and
a copolymer containing methyl (meth)acrylate and an alkyl (meth)acrylate having an alkyl group having 2 to 12 carbon atoms,
wherein a content of methyl (meth)acrylate is 25% by mass or more based on a total amount of monomer units contained in the copolymer.

***Fig.1***

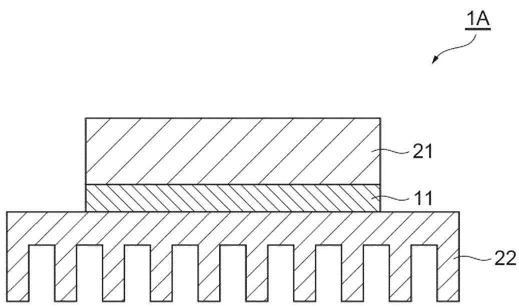


EP 4 512 837 A1

## Description

### Technical Field

The present invention relates to a composition containing a compound having a polyoxyalkylene chain and an acrylic copolymer.

### Background Art

In electronic components such as processors and power modules, batteries for electric vehicles, and the like, heat generation is accompanied during use. In order to protect such parts from heat, means for efficiently dissipating the generated heat is required. A thermally conductive material (may be referred to as heat dissipation material) called a thermal interface material (TIM) is a material provided between a heat source and a heat dissipation member such as a heat sink, and this material reduces heat resistance between a heat source and a heat dissipation member and promotes heat conduction from the heat source. Since the heat generated from the heat source is efficiently conducted to a cooling member via the TIM, heat is easily dissipated from the heat dissipation member.

As the thermally conductive material, many liquid materials are known, which are also referred to as heat-dissipating grease or thermally conductive grease. However, when a liquid thermally conductive grease is used, dripping after application, or a pump-out phenomenon in which due to deformation of members to which the thermally conductive grease is applied, the grease is pushed out from between the members, may occur. In order to solve such a problem, a thermally conductive material formed in a solid shape as is the case with a sheet may be used. A thermally conductive material in a solid form is obtained by, for example, curing a composition containing a polymerizable compound in addition to a thermally conductive filler.

In Patent Literature 1, it is described that a cured product of a curable composition containing a specific compound having a polyoxyalkylene chain and having two (meth)acryloyl groups has been found to have excellent elongation, and it has been found that since this curable composition contains a thermally conductive filler, the curable composition is suitably used as a thermally conductive material.

### Citation List

### Patent Literature

Patent Literature 1: International Publication WO 2021/107001

### Summary of Invention

### Technical Problem

An object of an aspect of the present invention is to provide a composition containing a specific compound having a polyoxyalkylene chain and having two (meth)acryloyl groups, which can form a cured product having excellent breaking strength.

### Solution to Problem

The present inventors conducted intensive research, and as a result, the inventors found that a cured product having excellent breaking strength can be obtained by further containing an acrylic copolymer containing specific (meth) acrylates as monomer units in the composition containing a specific compound having a polyoxyalkylene chain and having two (meth)acryloyl groups as described in Patent Literature 1. Furthermore, it was also found that when the copolymerization ratio of the acrylic copolymer is within a specific range, the compatibility between the compound having a polyoxyalkylene chain and having two (meth)acryloyl groups and the acrylic copolymer is improved, making it possible to prepare a composition that can suitably form the above-described cured product. According to some aspects, the present invention provides the following [1] to [6].

[1] A composition containing:

a compound represented by the following Formula (1):

[Chemical Formula 1]

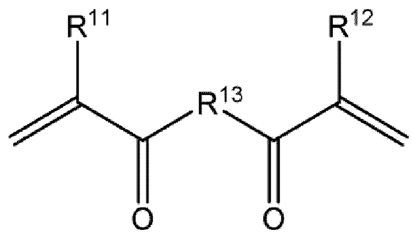

(1)

[in the Formula (1), $R^{11}$ and $R^{12}$ each independently represent a hydrogen atom or a methyl group; and $R^{13}$ represents a divalent group having a polyoxyalkylene chain]; and
a copolymer containing methyl (meth)acrylate and an alkyl (meth)acrylate having an alkyl group having 2 to 12 carbon atoms,
wherein a content of methyl (meth)acrylate is 25% by mass or more based on a total amount of monomer units contained in the copolymer.

[2] The composition according to [1], further containing a thermally conductive filler.
[3] The composition according to [1] or [2], further containing a compound represented by the following Formula (2):

[Chemical Formula 2]

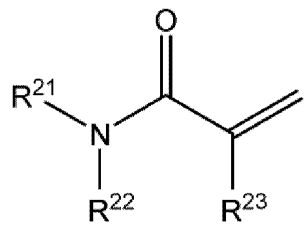

(2)

[in the Formula (2), $R^{21}$ and $R^{22}$ each independently represent a hydrogen atom or a monovalent organic group, and may be bonded to each other to form a ring; and $R^{23}$ represents a hydrogen atom or a methyl group].
[4] The composition according to any one of [1] to [3], further containing a compound represented by the following Formula (3):

[Chemical Formula 3]

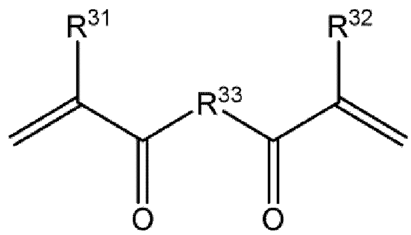

(3)

[in the Formula (3), $R^{31}$ and $R^{32}$ each independently represent a hydrogen atom or a methyl group; and $R^{33}$ represents a divalent group having a poly(meth)acrylate chain].
[5] A cured product of the composition according to any one of [1] to [4].
[6] An article containing: a heat source; and the cured product according to [5] in thermal contact with the heat source.

**Advantageous Effects of Invention**

According to an aspect of the present invention, a composition containing a specific compound having a polyoxyalkylene chain and having two (meth)acryloyl groups, which can form a cured product having excellent breaking strength can be provided.

## Brief Description of Drawings

[FIG. 1] FIG. 1 is a schematic cross-sectional view illustrating an embodiment of an article.
[FIG. 2] FIG. 2 is a schematic cross-sectional view illustrating another embodiment of the article.

## Description of Embodiments

Embodiments of the present invention will be described in detail below. Incidentally, the present invention is not intended to be limited to the following embodiments.
The term "(meth)acryloyl" according to the present specification means "acryloyl" and "methacryloyl" corresponding thereto, and the same also applies to similar expressions such as "(meth)acrylate" and "(meth)acryl".
The weight average molecular weight (Mw) and the ratio of the weight average molecular weight and the number average molecular weight (Mw/Mn) according to the present specification means values measured using gel permeation chromatography (GPC) under the following conditions and determined by using polystyrene as a standard substance.

· Measuring instrument: HLC-8320GPC (product name, manufactured by Tosoh Corporation)
· Analytical column: TSKgel SuperMultipore HZ-H (three pieces connected together) (product name, manufactured by Tosoh Corporation)
· Guard column: TSKguardcolumn SuperMP (HZ)-H (product name, manufactured by Tosoh Corporation)
· Eluent: THF
· Measurement temperature: 25°C

The composition according to an embodiment of the present invention contains a compound represented by the following Formula (1).

[Chemical Formula 4]

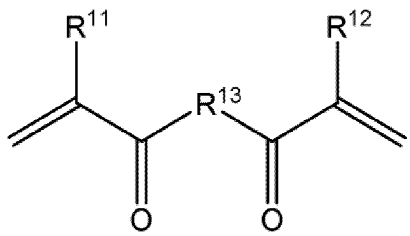

(1)

In the Formula (1), $R^{11}$ and $R^{12}$ each independently represent a hydrogen atom or a methyl group, and $R^{13}$ represents a divalent group having a polyoxyalkylene chain.
According to an embodiment, one of $R^{11}$ and $R^{12}$ may be a hydrogen atom while the other may be a methyl group. According to another embodiment, both $R^{11}$ and $R^{12}$ may be hydrogen atoms. According to another embodiment, both $R^{11}$ and $R^{12}$ may be methyl groups.
According to an embodiment, the polyoxyalkylene chain contains a structural unit represented by the following Formula (1a). Thereby, an excessive increase in the viscosity of the composition can be suppressed, and at the same time, the strength of the cured product can be further increased.

[Chemical Formula 5]

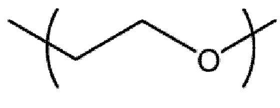

(1a)

In this case, $R^{13}$ may be a divalent group having a polyoxyethylene chain, and the compound represented by the Formula (1) is preferably a compound represented by the following Formula (1-2) (polyethylene glycol di(meth)acrylate).

[Chemical Formula 6]

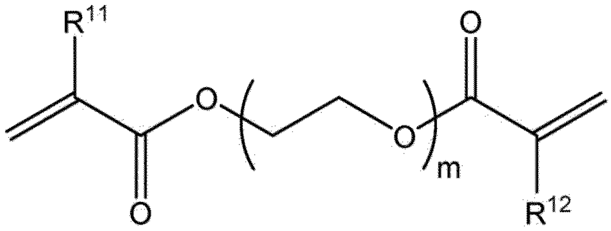

(1-2)

In the Formula (1-2), $R^{11}$ and $R^{12}$ have the same meanings as $R^{11}$ and $R^{12}$ in the Formula (1), respectively, and m is an integer of 2 or greater.

According to another embodiment, the polyoxyalkylene chain contains a structural unit represented by the following Formula (1b). Thereby, handling of the composition can be facilitated.

[Chemical Formula 7]

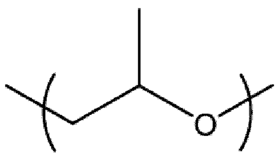

(1b)

In this case, $R^{13}$ may be a divalent group having a polyoxypropylene chain, and the compound represented by the Formula (1) is preferably a compound represented by the following Formula (1-3) (polypropylene glycol di(meth)acrylate).

[Chemical Formula 8]

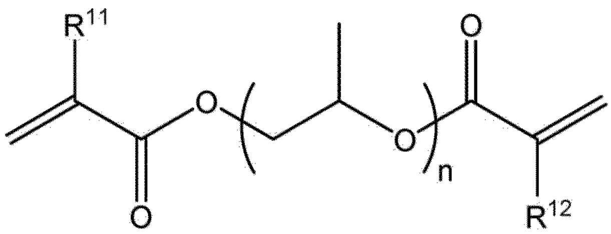

(1-3)

In the Formula (1-3), $R^{11}$ and $R^{12}$ have the same meanings as $R^{11}$ and $R^{12}$ in the Formula (1), respectively, and n is an integer of 2 or greater.

According to another embodiment, from the viewpoint of easily achieving both the strength of a cured product of the compound represented by the Formula (1) and ease of handling of the composition, the polyoxyalkylene chain is preferably a copolymer chain containing the above-mentioned structural unit represented by the Formula (1a) and the above-mentioned structural unit represented by the Formula (1b). The copolymer chain may be any of an alternating copolymer chain, a block copolymer chain, or a random copolymer chain. The copolymer chain is preferably a random copolymer chain, from the viewpoint of further lowering the crystallinity of the compound represented by the Formula (1) and further facilitating the handling of the composition.

According to each of the above-mentioned embodiments, the polyoxyalkylene chain may have an oxyalkylene group having 4 or 5 carbon atoms, such as an oxytetramethylene group, an oxybutylene group, or an oxypentylene group, as a structural unit in addition to the structural unit represented by the Formula (1a) and the structural unit represented by the Formula (1b).

$R^{13}$ may be a divalent group further having an additional organic group in addition to the above-mentioned polyoxyalkylene chain. The additional organic group may be a chain-shaped group other than a polyoxyalkylene chain, and may be, for example, a methylene chain (chain having $-CH_2-$ as a structural unit), a polyester chain (chain having -COO- in a structural unit), or a polyurethane chain (chain having -OCON- in a structural unit).

For example, the compound represented by the Formula (1) may be a compound represented by the following Formula (1-4).

[Chemical Formula 9]

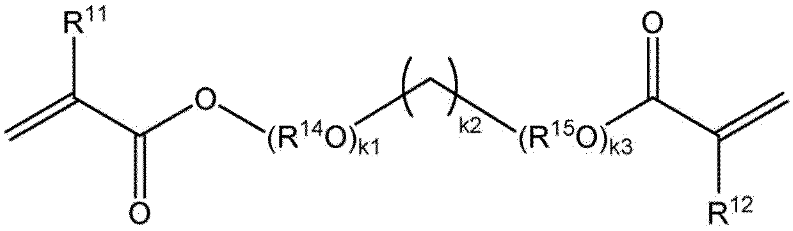

(1-4)

In the Formula (1-4), $R^{11}$ and $R^{12}$ have the same meanings as $R^{11}$ and $R^{12}$ in the Formula (1), respectively; $R^{14}$ and $R^{15}$ each independently represent an alkylene group having 2 to 5 carbon atoms; and k1, k2, and k3 each independently represent an integer of 2 or greater. k2 may be, for example, an integer of 16 or less.

A plurality of $R^{14}$ and a plurality of $R^{15}$ present therein may be each identical with one another or may be different from one another. A plurality of $R^{14}$ and a plurality of $R^{15}$ each preferably contains an ethylene group and a propylene group. That is, the polyoxyalkylene chain represented by $(R^{14}O)_{k1}$ and the polyoxyalkylene chain represented by $(R^{15}O)_{k3}$ are each preferably a copolymer chain containing an oxyethylene group (the structural unit represented by the Formula (1a)) and an oxypropylene group (the structural unit represented by the Formula (1b)).

According to each of the above-mentioned embodiments, the number of oxyalkylene groups in the polyoxyalkylene chain is preferably 100 or greater. When the number of oxyalkylene groups in the polyoxyalkylene chain is 100 or greater, as the main chain of the compound represented by the Formula (1) becomes longer, elongation of the cured product is more excellent, and the strength of the cured product can also be further increased. The number of oxyalkylene groups corresponds to each of m in the Formula (1-2), n in the Formula (1-3), and k1 and k3 in the Formula (1-4).

The number of oxyalkylene groups in the polyoxyalkylene chain is more preferably 130 or greater, 180 or greater, 200 or greater, 220 or greater, 250 or greater, 270 or greater, 300 or greater, or 320 or greater. The number of oxyalkylene groups in the polyoxyalkylene chain may be 600 or less, 570 or less, or 530 or less.

From the viewpoint that the cured product has lower elasticity and more excellent elongation, the weight average molecular weight of the compound represented by the Formula (1) is preferably 5000 or more, 6000 or more, 7000 or more, 8000 or more, 9000 or more, 10000 or more, 11000 or more, 12000 or more, 13000 or more, 14000 or more, or 15000 or more. From the viewpoint of facilitating adjustment of the viscosity of the composition, the weight average molecular weight of the compound represented by the Formula (1) is preferably 100000 or less, 80000 or less, 60000 or less, 34000 or less, 31000 or less, or 28000 or less.

The compound represented by the Formula (1) may be liquid at 25°C. In this case, the viscosity at 25°C of the compound represented by the Formula (1) is preferably 1000 Pa·s or less, 800 Pa·s or less, 600 Pa·s or less, 500 Pa·s or less, 350 Pa·s or less, 300 Pa·s or less, or 200 Pa·s or less, from the viewpoint of facilitating application of the composition on a coating surface and from the viewpoint of enhancing the adhesiveness of the cured product to the coating surface. The viscosity at 25°C of the compound represented by the Formula (1) may be 0.1 Pa·s or more, 0.2 Pa·s or more, 0.3 Pa·s or more, 1 Pa·s or more, 2 Pa·s or more, or 3 Pa·s or more.

The compound represented by the Formula (1) may be solid at 25°C. In this case, from the viewpoint of improving the handleability of the composition, the compound represented by the Formula (1) is preferably liquid at 50°C. Furthermore, in this case, from the viewpoint of further improving the handleability of the composition, the viscosity at 50°C of the compound represented by the Formula (1) is preferably 100 Pa·s or less, more preferably 50 Pa·s or less, even more preferably 30 Pa·s or less, and particularly preferably 20 Pa·s or less. The viscosity at 50°C of the compound represented by the Formula (1) may be 0.1 Pa·s or more, 0.2 Pa·s or more, or 0.3 Pa·s or more.

In the present specification, the viscosity means a value measured based on JIS Z8803 and specifically means a value measured by using an E type viscometer (for example, PE-80L manufactured by Toki Sangyo Co., Ltd.). Incidentally, calibration of the viscometer can be carried out based on JIS Z8809-JS14000. The viscosity of the compound represented by the Formula (1) can be adjusted by adjusting the weight average molecular weight of the compound.

From the viewpoint that the cured product has more excellent elongation, the content of the compound represented by the Formula (1) is preferably 1% by mass or more, 1.2% by mass or more, or 1.3% by mass or more, and may be, for example, 5% by mass or less, 4% by mass or less, 3% by mass or less, or 2% by mass or less, based on the total amount of the composition.

The composition contains a compound represented by the Formula (1) as a polymerizable compound, and according to an embodiment, the composition may further contain a compound represented by the Formula (2), may further contain a compound represented by the Formula (3), and may further contain an additional polymerizable compound other than the compound represented by the Formula (1), the compound represented by the Formula (2), and the compound represented by the Formula (3) (the details will be described below). From the viewpoint that the cured

product has more excellent elongation, the content of the compound represented by the Formula (1) is preferably 5 parts by mass or more, 7 parts by mass or more, 10 parts by mass or more, 15 parts by mass or more, or 20 parts by mass or more, and may be, for example, 60 parts by mass or less, 55 parts by mass or less, 50 parts by mass or less, 45 parts by mass or less, or 40 parts by mass or less, with respect to 100 parts by mass of the sum of the compound represented by the Formula (1), and the compound represented by the Formula (2), the compound represented by the Formula (3), and the additional polymerizable compound that are optionally contained (hereinafter, referred to as "total content of polymerizable components").

The composition according to an embodiment of the present invention contains a copolymer containing methyl (meth)acrylate and an alkyl (meth)acrylate having an alkyl group having 2 to 12 carbon atoms (hereinafter, also referred to as "C2-C12 alkyl (meth)acrylate") as monomer units (hereinafter, also referred to as "acrylic copolymer") in addition to the compound represented by the Formula (1).

The content of methyl (meth)acrylate contained in the acrylic copolymer is 25% by mass or more based on the total amount of the monomer units contained in the acrylic copolymer (hereinafter, also simply referred to as "total amount of the monomer units"). The content of methyl (meth)acrylate may be 27% by mass or more, 30% by mass or more, or 35% by mass or more, and may be 70% by mass or less, 60% by mass or less, 50% by mass or less, or 45% by mass or less, based on the total amount of the monomer units.

The number of carbon atoms of the alkyl group in the C2-C12 alkyl (meth)acrylate may be 3 or more, and may be 8 or less, 7 or less, or 6 or less. The alkyl group may be linear, may be branched, or may be cyclic.

In a case where the alkyl group in the C2-C12 alkyl (meth)acrylate is linear, specific examples thereof include ethyl (meth)acrylate, n-propyl (meth)acrylate, n-butyl (meth)acrylate, n-pentyl (meth)acrylate, n-hexyl (meth)acrylate, n-heptyl (meth)acrylate, n-octyl (meth)acrylate octyl (meth)acrylate, n-nonyl (meth)acrylate, n-decyl (meth)acrylate, and lauryl (meth)acrylate. In a case where the alkyl group in the C2-C12 alkyl (meth)acrylate is branched, specific examples thereof include isopropyl (meth)acrylate, s-butyl (meth)acrylate, t-butyl (meth)acrylate, isobutyl (meth)acrylate, isopentyl (meth)acrylate, isohexyl (meth)acrylate, isoheptyl (meth)acrylate, isooctyl (meth)acrylate, 2-ethylhexyl (meth)acrylate, isononyl (meth)acrylate, and isodecyl (meth)acrylate. In a case where the alkyl group in the C2-C12 alkyl (meth)acrylate is cyclic (cycloalkyl group), specific examples thereof include cyclohexyl (meth)acrylate.

The above-mentioned C2-C12 alkyl (meth)acrylates may be used singly or in combination of two or more kinds thereof.

The content of the C2-C12 alkyl (meth)acrylate contained in the acrylic copolymer may be 40% by mass or more, 50% by mass or more, 55% by mass or more, or 60% by mass or more, and may be 75% by mass or less, 70% by mass or less, or 65% by mass or less, based on the total amount of the monomer units.

The acrylic copolymer may contain only methyl (meth)acrylate and a C2-C12 alkyl (meth)acrylate as the monomer units, and may further contain an additional monomer unit that can be copolymerized with methyl (meth) acrylate and the C2-C12 alkyl (meth)acrylate. Examples of the additional monomer unit include a carboxyl group-containing monomer, a hydroxyl group-containing monomer, an isocyanate group-containing monomer, an amino group-containing monomer, and an epoxy group-containing monomer.

Examples of the carboxyl group-containing monomer include (meth)acrylic acid, carboxyethyl (meth)acrylate, carboxypentyl (meth)acrylate, itaconic acid, maleic acid, fumaric acid, crotonic acid, and isocrotonic acid. Examples of the hydroxyl group-containing monomer include 2-hydroxyethyl (meth)acrylate, 3-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, and 12-hydroxylauryl (meth)acrylate.

Examples of the isocyanate group-containing monomer include 2-methacryloyloxyethyl isocyanate and 2-acryloxyethyl isocyanate. Examples of the amino group-containing monomer include N,N-dimethylaminoethyl (meth) acrylate, N,N-diethylaminoethyl (meth)acrylate, N,N-dimethylaminopropyl (meth)acrylate, and N,N-diethylaminopropyl (meth)acrylate.

Examples of the epoxy group-containing monomer include glycidyl (meth)acrylate, glycidyl α-ethyl (meth) acrylate, glycidyl α-n-propyl (meth)acrylate, glycidyl α-n-butyl (meth)acrylate, 3,4-epoxybutyl (meth)acrylate, 4,5-epoxypentyl (meth)acrylate, 6,7-epoxyheptyl (meth)acrylate, 6,7-epoxyheptyl α-ethyl (meth)acrylate, 3-methyl-3,4-epoxybutyl (meth)acrylate, 4-methyl-4,5-epoxypentyl (meth)acrylate, 5-methyl-5,6-epoxyhexyl (meth)acrylate, β-methylglycidyl (meth)acrylate, and β-methylglycidyl α-ethyl (meth)acrylate.

The content of the additional monomer unit may be 10% by mass or less, 5% by mass or less, 3% by mass or less, or 1% by mass or less, based on the total amount of the monomer units.

The acrylic copolymer may be an alternating copolymer, a block copolymer, or a random copolymer, each containing methyl (meth)acrylate unit, a C2-C12 alkyl (meth)acrylate unit, and optionally an additional monomer unit, and the acrylic copolymer is preferably a block copolymer.

The block copolymer may have a block containing a methyl (meth)acrylate unit (hereinafter, also referred to as "first block") and a block containing a C2-C12 alkyl (meth)acrylate (hereinafter, also referred to as "second block").

The content of the methyl (meth)acrylate contained in the first block may be 90% by mass or more, 95% by mass

or more, or 99% by mass or more, based on the total amount of the monomer units contained in the first block. The first block may be, for example, a polymethyl (meth)acrylate block containing only methyl (meth)acrylate as the monomer unit.

The content of the C2-C12 alkyl (meth)acrylate contained in the second block may be 90% by mass or more, 95% by mass or more, or 99% by mass or more, based on the total amount of the monomer units contained in the second block. The second block may contain one kind selected from C2-C12 alkyl (meth)acrylates, or may contain two or more kinds thereof, as the monomer unit. The second block may be, for example, a poly-n-butyl (meth)acrylate block containing only n-butyl (meth)acrylate as the monomer unit.

The block copolymer may be a diblock copolymer in which the first block and the second block are bonded in this order, or may be a triblock copolymer in which the first block, the second block, and the first block are bonded in this order.

The content of the acrylic copolymer may be 0.05% by mass or more, 0.1% by mass or more, or 0.15% by mass or more, and may be 1% by mass or less, 0.5% by mass or less, or 0.3% by mass or less, based on the total amount of the composition.

The content of the acrylic copolymer may be 1 part by mass or more, 2 parts by mass or more, or 3 parts by mass or more, and may be 10 parts by mass or less, 7 parts by mass or less, or 5 parts by mass or less, with respect to 100 parts by mass of the total content of polymerizable components.

The content of the acrylic copolymer may be 5 parts by mass or more, 7 parts by mass or more, 10 parts by mass or more, or 13 parts by mass or more, and may be 40 parts by mass or less, 30 parts by mass or less, or 25 parts by mass or less, with respect to 100 parts by mass of the content of the compound represented by the Formula (1).

The composition may further contain a thixotropy-imparting agent. The thixotropy-imparting agent is preferably an ester-based thixotropy-imparting agent containing an ester compound. The thixotropy-imparting agent may be liquid at 25°C.

The ester-based thixotropy-imparting agent may contain at least one selected from the group consisting of a phosphate ester, a fatty acid ester, and an aromatic ester.

The phosphate ester may be a polyether phosphate ester. Examples of the polyether phosphate ester include, for example, an ester of polyoxyethylene alkyl ether phosphate, an ester of polyoxyethylene alkyl phenyl ether phosphate, and an ester of a higher alcohol phosphate.

Examples of a commercially available product of the ester-based thixotropy-imparting agent include DISPARLON 3500 (manufactured by Kusumoto Chemicals, Ltd.), FLOWNON RCM-100 (manufactured by Kyoeisha Chemical Co., Ltd.), and BYK-R606 (manufactured by Big Chemie Japan Co., Ltd.).

The above-mentioned thixotropy-imparting agents (preferably ester-based thixotropy-imparting agents) may be used singly or in combination of two or more kinds thereof.

The content of the thixotropy-imparting agent (preferably an ester-based thixotropy-imparting agent) may be 0.01% by mass or more, 0.02% by mass or more, or 0.03% by mass or more, and may be 0.5% by mass or less, 0.3% by mass or less, or 0.1% by mass or less, based on the total amount of the composition.

The content of the thixotropy-imparting agent (preferably an ester-based thixotropy-imparting agent) may be 0.1 parts by mass or more, 0.3 parts by mass or more, or 0.5 parts by mass or more, and may be 5 parts by mass or less, 4 parts by mass or less, or 3 parts by mass or less, with respect to 100 parts by mass of the total content of polymerizable components.

The content of the thixotropy-imparting agent (preferably an ester-based thixotropy-imparting agent) may be 1 part by mass or more, 2 parts by mass or more, or 3 parts by mass or more, and may be 10 parts by mass or less, 8 parts by mass or less, or 5 parts by mass or less, with respect to 100 parts by mass of the content of the compound represented by the Formula (1).

The composition may further contain a compound represented by the following Formula (2):

[Chemical Formula 10]

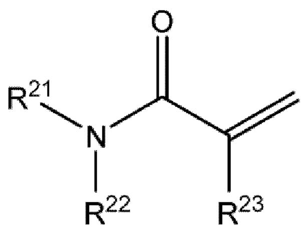

(2)

In the Formula (2), $R^{21}$ and $R^{22}$ each independently represent a hydrogen atom or a monovalent organic group, and may be bonded to each other to form a ring. $R^{23}$ represents a hydrogen atom or a methyl group.

According to an embodiment, one of $R^{21}$ and $R^{22}$ may be a hydrogen atom, and the other may be a monovalent

organic group. According to another embodiment, both $R^{21}$ and $R^{22}$ may be hydrogen atoms. According to another embodiment, both $R^{21}$ and $R^{22}$ may be monovalent organic groups that may be bonded to each other to form a ring.

When $R^{21}$ and $R^{22}$ are not bonded to each other to form a ring, the monovalent organic group may be, for example, a monovalent hydrocarbon group, or may be an alkyl group. The number of carbon atoms of the monovalent hydrocarbon group (for example, an alkyl group) may be, for example, 1 or more and may be 6 or less. Examples of the alkyl group include a methyl group, an ethyl group, an n-propyl group, and an isopropyl group. Examples of the compound represented by the Formula (2) in a case where $R^{21}$ and $R^{22}$ are not bonded to each other to form a ring, include dimethylacrylamide, diethylacrylamide, and diisopropylacrylamide.

$R^{21}$ and $R^{22}$ are preferably bonded to each other to form a ring. In this case, the ring may be, for example, a 5-membered ring, a 6-membered ring, or a 7-membered ring, and is preferably a 6-membered ring. This ring is formed by a nitrogen atom and groups represented by $R^{21}$ and $R^{22}$ in the Formula (2). The ring may contain carbon atoms, hydrogen atoms, oxygen atoms, sulfur atoms, and the like in addition to the nitrogen atom, and preferably contains only carbon atoms, hydrogen atoms, and oxygen atoms in addition to the nitrogen atom. That is, the groups represented by $R^{21}$ and $R^{22}$ may be groups containing carbon atoms, hydrogen atoms, oxygen atoms, sulfur atoms, and the like, and may be preferably groups containing only carbon atoms, hydrogen atoms, and oxygen atoms. Examples of the compound represented by the Formula (2) in a case where $R^{21}$ and $R^{22}$ are bonded to each other to form a ring, include N-(meth)acryloylmorpholine, N-acryloylthiomorpholine, N-acryloyloxazoline, N-acryloylthiazolidine, N-acryloylimidazolidine, N-(meth)acryloylpiperazine, N-vinylpyrrolidone, and N-vinylcaprolactam.

From the viewpoint that the cured product has more excellent heat resistance, the content of the compound represented by the Formula (2) is preferably 0.1% by mass or more, 0.2% by mass or more, 0.3% by mass or more, or 0.5% by mass or more, and may be, for example, 2% by mass or less, 1.5% by mass or less, 1.3% by mass or less, or 1% by mass or less, based on the total amount of the composition.

From the viewpoint that the cured product has more excellent heat resistance, the content of the compound represented by the Formula (2) is preferably 1 part by mass or more, 2 parts by mass or more, 5 parts by mass or more, 8 parts by mass or more, or 9 parts by mass or more, and the content may be, for example, 30 parts by mass or less, 25 parts by mass or less, 20 parts by mass or less, 15 parts by mass or less, or 12 parts by mass or less, with respect to 100 parts by mass of the total content of polymerizable components.

The composition may further contain a compound represented by the following Formula (3):

[Chemical Formula 11]

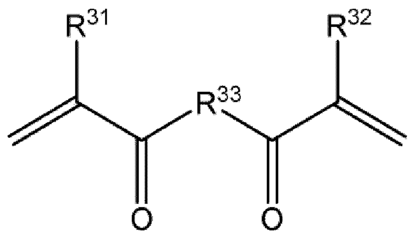

(3)

In the Formula (3), $R^{31}$ and $R^{32}$ each independently represent a hydrogen atom or a methyl group, and $R^{33}$ represents a divalent group having a poly(meth)acrylate chain.

According to an embodiment, one of $R^{31}$ and $R^{32}$ may be a hydrogen atom, and the other may be a methyl group. According to another embodiment, both $R^{31}$ and $R^{32}$ may be hydrogen atoms. According to another embodiment, both $R^{31}$ and $R^{32}$ may be methyl groups.

The poly(meth)acrylate chain contains a structural unit represented by the following Formula (3a):

[Chemical Formula 12]

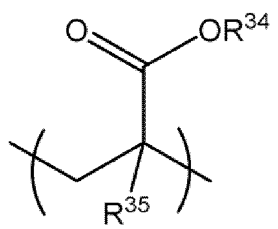

(3a)

In the Formula (3a), $R^{34}$ represents a hydrogen atom or a monovalent organic group, and $R^{35}$ represents a

hydrogen atom or a methyl group.

The monovalent organic group represented by $R^{34}$ may be, for example, a hydrocarbon group and may also be an organic group having an oxygen atom, a nitrogen atom, or the like. The hydrocarbon group may be in a chain form and may have a ring (for example, an aromatic ring). The number of carbon atoms of the hydrocarbon group may be, for example, 1 or greater and may be 18 or less. Examples of the hydrocarbon group include a methyl group, an ethyl group, an n-propyl group, an isopropyl group, an n-butyl group, an isobutyl group, a t-butyl group, an n-pentyl group, an n-hexyl group, an n-heptyl group, an n-octyl group, a 2-ethylhexyl group, a 2-propylheptyl group, a nonyl group, a decyl group, an isodecyl group, a dodecyl group, an octadecyl group, a phenyl group, a toluyl group, and a benzyl group.

Examples of an organic group having an oxygen atom include a group having an alkoxy group, a group having a hydroxyl group, a group having a carboxyl group, and a group having a glycidyl group. Examples of a group having an alkoxy group include a 2-methoxyethyl group and a 3-methoxybutyl group. Examples of a group having a hydroxyl group include a 2-hydroxyethyl group, a 2-hydroxypropyl group, and a 4-hydroxybutyl group. Examples of a group having a carboxyl group include a carboxyl group. Examples of a group having a glycidyl group include a glycidyl group. That is, examples of the organic group having an oxygen atom include a 2-methoxyethyl group, a 3-methoxybutyl group, a 2-hydroxyethyl group, a 2-hydroxypropyl group, a 4-hydroxybutyl group, a carboxyl group, and a glycidyl group.

Examples of an organic group having a nitrogen atom include groups having an amino group or a nitrile group. Examples of a group having an amino group include a 2-aminoethyl group. Examples of a group having a nitrile group include a nitrile group. That is, examples of the organic group having a nitrogen atom include a 2-aminoethyl group and a nitrile group.

According to an embodiment, the monovalent organic group represented by $R^{34}$ may be a group having a polar group and may be a group having a hydroxyl group or a carboxyl group.

For example, the compound represented by the Formula (3) may be a compound represented by the following Formula (3-2).

[Chemical Formula 13]

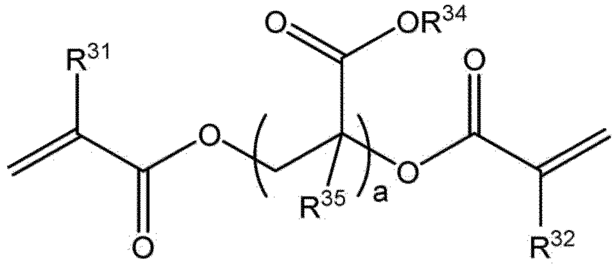

(3-2)

In the Formula (3-2), $R^{31}$ and $R^{32}$ have the same meanings as $R^{31}$ and $R^{32}$ in the Formula (3), respectively; $R^{34}$ and $R^{35}$ have the same meanings as $R^{34}$ and $R^{35}$ in the Formula (3a), respectively; and a is an integer of 2 or greater.

The weight average molecular weight of the compound represented by the Formula (3) is preferably 3000 or more, 4000 or more, 5000 or more, 6000 or more, 7000 or more, 8000 or more, 9000 or more, 10000 or more, 11000 or more, 12000 or more, or 13000 or more. From the viewpoint of facilitating adjustment of the viscosity of the composition, the weight average molecular weight of the compound represented by the Formula (3) is preferably 100000 or less, 80000 or less, 60000 or less, 34000 or less, 31000 or less, or 28000 or less. a in the Formula (3a) may be an integer such that the weight average molecular weight of the compound represented by the Formula (3) falls in the above-described range.

The ratio (Mw/Mn) of the weight average molecular weight (Mw) and the number average molecular weight (Mn) of the compound represented by the Formula (3) is preferably 1.4 or less or 1.2 or less.

The compound represented by the Formula (3) may be liquid at 23°C. In this case, the viscosity at 23°C of the compound represented by the Formula (3) is 1000 Pa·s or less, 800 Pa·s or less, 700 Pa·s or less, 600 Pa·s or less, or 550 Pa·s or less, from the viewpoint of facilitating application of the composition on a coating surface and from the viewpoint of enhancing the adhesiveness of the cured product to the coating surface. The viscosity at 25°C of the compound represented by the Formula (3) may be 5 Pa·s or more, 10 Pa·s or more, 15 Pa·s or more, 20 Pa·s or more, 25 Pa·s or more, 30 Pa·s or more, or 35 Pa·s or more.

The glass transition temperature (Tg) of the compound represented by the Formula (3) may be 0°C or lower, -10°C or lower, or -30°C or lower and may be -60°C or higher, -50°C or higher, or -40°C or higher. The glass transition temperature means a value measured by differential scanning calorimetry.

From the viewpoint that the cured product has more excellent heat resistance, the content of the compound represented by the Formula (3) is preferably 0.1% by mass or more, 0.3% by mass or more, or 0.4% by mass or more, and may be, for example, 3% by mass or less, 2% by mass or less, or 1% by mass or less, based on the total amount of the

composition.

From the viewpoint that the cured product has more excellent heat resistance, the content of the compound represented by the Formula (3) is preferably 1 part by mass or more, 3 parts by mass or more, 5 parts by mass or more, or 6 parts by mass or more, and may be, for example, 40 parts by mass or less, 20 parts by mass or less, or 10 parts by mass or less, with respect to 100 parts by mass of the total content of polymerizable components.

The composition may further contain an additional polymerizable compound capable of copolymerization with the above-mentioned compound represented by the Formula (1), compound represented by the Formula (2), and compound represented by the Formula (3), for the purpose of adjusting the physical properties of the composition, and the like.

The additional polymerizable compound may be, for example, a compound having one (meth)acryloyl group, other than the compound represented by the Formula (2). This compound may be, for example, an alkyl (meth)acrylate. The additional polymerizable compound may also be a compound having an aromatic hydrocarbon group, a group containing a polyoxyalkylene chain, a group containing a heterocyclic ring, an alkoxy group, a phenoxy group, a group containing a silane group, a group containing a siloxane bond, a halogen atom, a hydroxyl group, a carboxyl group, an amino group, or an epoxy group, in addition to the one (meth)acryloyl group. Particularly, when the composition contains an alkyl (meth)acrylate, the viscosity of the composition can be easily adjusted. Furthermore, when the composition contains a compound having a hydroxyl group, a carboxyl group, an amino group, or an epoxy group in addition to the (meth)acryloyl group, the adhesiveness of the composition and a cured product thereof to members can be further improved.

The alkyl group (alkyl group moiety other than the (meth)acryloyl group) in the alkyl (meth)acrylate may be linear, may be branched, or may be cyclic. The number of carbon atoms of the alkyl group may be, for example, 1 to 30. The number of carbon atoms of the alkyl group may be 1 to 11, 1 to 8, 1 to 6, or 1 to 4, and may be 12 to 30, 12 to 28, 12 to 24, 12 to 22, 12 to 18, or 12 to 14.

Examples of the alkyl (meth)acrylate having a linear alkyl group include, for example, an alkyl (meth)acrylate having a linear alkyl group having 1 to 11 carbon atoms and an alkyl (meth)acrylate having a linear alkyl group having 12 to 30 carbon atoms.

Examples of an alkyl (meth)acrylate having a linear alkyl group having 1 to 11 carbon atoms include methyl (meth)acrylate, ethyl (meth)acrylate, propyl (meth)acrylate, butyl (meth)acrylate, pentyl (meth)acrylate, n-hexyl (meth)acrylate, n-heptyl (meth)acrylate, octyl (meth)acrylate, nonyl (meth)acrylate, decyl (meth)acrylate, and undecyl (meth)acrylate.

Examples of an alkyl (meth)acrylate having a linear alkyl group having 12 to 30 carbon atoms include dodecyl (meth)acrylate (lauryl (meth)acrylate), tetradecyl (meth)acrylate, hexadecyl (meth)acrylate (cetyl (meth)acrylate), octadecyl (meth)acrylate (stearyl (meth)acrylate), docosyl (meth)acrylate (behenyl (meth)acrylate), tetracosyl (meth)acrylate, hexacosyl (meth)acrylate, and octacosyl (meth)acrylate.

Examples of an alkyl (meth)acrylate having a branched alkyl group include an alkyl (meth)acrylate having a branched alkyl group having 1 to 11 carbon atoms and an alkyl (meth)acrylate having a branched alkyl group having 12 to 30 carbon atoms.

Examples of the alkyl (meth)acrylate having a branched alkyl group having 1 to **11** carbon atoms include, for example, s-butyl (meth)acrylate, t-butyl (meth)acrylate, isobutyl (meth)acrylate, isopentyl (meth)acrylate, isoamyl (meth)acrylate, isooctyl (meth)acrylate, 2-ethylhexyl (meth)acrylate, isononyl (meth)acrylate, and isodecyl (meth)acrylate.

Examples of the alkyl (meth)acrylate having a branched alkyl group having 12 to 30 carbon atoms include isomyristyl (meth)acrylate, 2-propylheptyl (meth)acrylate, isoundecyl (meth)acrylate, isododecyl (meth)acrylate, isotridecyl (meth)acrylate, isopentadecyl (meth)acrylate, isohexadecyl (meth)acrylate, isoheptadecyl (meth)acrylate, isostearyl (meth)acrylate, and decyltetradecanyl (meth)acrylate.

Examples of an alkyl (meth)acrylate having a cyclic alkyl group (cycloalkyl group) include cyclohexyl (meth)acrylate, 3,3,5-trimethylcyclohexyl (meth)acrylate, isobornyl (meth)acrylate, terpene (meth)acrylate, and dicyclopentanyl (meth)acrylate.

Examples of a compound having a (meth)acryloyl group and an aromatic hydrocarbon group include benzyl (meth)acrylate.

Examples of a compound having a (meth)acryloyl group and a group containing a polyoxyalkylene chain include polyethylene glycol (meth)acrylate, methoxy polyethylene glycol (meth)acrylate, polypropylene glycol (meth)acrylate, methoxy polypropylene glycol (meth)acrylate, polybutylene glycol (meth)acrylate, and methoxy polybutylene glycol (meth)acrylate.

Examples of a compound having a (meth)acryloyl group and a group containing a heterocyclic ring include tetrahydrofurfuryl (meth)acrylate.

Examples of a compound having a (meth)acryloyl group and an alkoxy group include 2-methoxyethyl acrylate.

Examples of a compound having a (meth)acryloyl group and a phenoxy group include phenoxyethyl (meth)acrylate.

Examples of a compound having a (meth)acryloyl group and a group containing a silane group include 3-acryloxypropyltriethoxysilane, 10-methacryloyloxydecyltrimethoxysilane, 10-acryloyloxydecyltrimethoxysilane, 10-methacryloyloxydecyltriethoxysilane, and 10-acryloyloxydecyltriethoxysilane.

Examples of a compound having a (meth)acryloyl group and a group containing a siloxane bond include silicone (meth)acrylate.

Examples of a compound having a (meth)acryloyl group and a halogen atom include a (meth)acrylate having a fluorine atom. Examples of a (meth)acrylate having a fluorine atom include trifluoromethyl (meth)acrylate, 2,2,2-trifluoroethyl (meth)acrylate, 1,1,1,3,3,3-hexafluoro-2-propyl (meth)acrylate, perfluoroethylmethyl (meth)acrylate, perfluoropropylmethyl (meth)acrylate, perfluorobutylmethyl (meth)acrylate, perfluoropentylmethyl (meth)acrylate, perfluorohexylmethyl (meth)acrylate, perfluoroheptylmethyl (meth)acrylate, perfluorooctylmethyl (meth)acrylate, perfluorononylmethyl (meth)acrylate, perfluorodecylmethyl (meth)acrylate, perfluoroundecylmethyl (meth)acrylate, perfluorododecylmethyl (meth)acrylate, perfluorotridecylmethyl (meth)acrylate, perfluorotetradecylmethyl (meth)acrylate, 2-(trifluoromethyl)ethyl (meth)acrylate, 2-(perfluoroethyl)ethyl (meth)acrylate, 2-(perfluoropropyl)ethyl (meth)acrylate, 2-(perfluorobutyl)ethyl (meth)acrylate, 2-(perfluoropentyl)ethyl (meth)acrylate, 2-(perfluorohexyl)ethyl (meth)acrylate, 2-(perfluoroheptyl)ethyl (meth)acrylate, 2-(perfluorooctyl)ethyl (meth)acrylate, 2-(perfluorononyl)ethyl (meth)acrylate, 2-(perfluorotridecyl)ethyl (meth)acrylate, and 2-(perfluorotetradecyl)ethyl (meth)acrylate.

Examples of a compound having a (meth)acryloyl group and a hydroxyl group include a hydroxyalkyl (meth)acrylate and a hydroxyalkylcycloalkane (meth)acrylate. Examples of the hydroxyalkyl (meth)acrylate include such as 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, and 12-hydroxylauryl (meth)acrylate. Examples of the hydroxyalkylcycloalkane (meth)acrylate include (4-hydroxymethylcyclohexyl)methyl (meth)acrylate.

Examples of a compound having a (meth)acryloyl group and a carboxyl group include (meth)acrylic acid, carboxyethyl (meth)acrylate, carboxypentyl (meth)acrylate, phthalic acid monohydroxyethyl acrylate (for example, "ARONIX M5400" manufactured by TOAGOSEI CO., LTD.), and 2-acryloyloxyethyl succinate (for example, "NK ESTER A-SA" manufactured by SHIN-NAKAMURA CHEMICAL Co., Ltd.).

Examples of a compound having a (meth)acryloyl group and an amino group include N,N-dimethylaminoethyl (meth)acrylate, N,N-diethylaminoethyl (meth)acrylate, N,N-dimethylaminopropyl (meth)acrylate, and N,N-diethylaminopropyl (meth)acrylate.

Examples of a compound having a (meth)acryloyl group and an epoxy group include glycidyl (meth)acrylate, glycidyl α-ethyl (meth)acrylate, glycidyl α-n-propyl (meth)acrylate, glycidyl α-n-butyl (meth)acrylate, 3,4-epoxybutyl (meth)acrylate, 4,5-epoxypentyl (meth)acrylate, 6,7-epoxyheptyl (meth)acrylate, 6,7-epoxyheptyl α-ethyl (meth)acrylate, 3-methyl-3,4-epoxybutyl (meth)acrylate, 4-methyl-4,5-epoxypentyl (meth)acrylate, 5-methyl-5,6-epoxyhexyl (meth)acrylate, β-methylglycidyl (meth)acrylate, and β-methylglycidyl α-ethyl (meth)acrylate.

From the viewpoint of facilitating adjustment of the viscosity of the composition, or from the viewpoint of further enhancing the adhesiveness of the composition, the content of the additional polymerizable compound is preferably 1% by mass or more, 2% by mass or more, 3% by mass or more, or 3.5% by mass or more, and may be, for example, 10% by mass or less, 8% by mass or less, 6% by mass or less, or 5% by mass or less, based on the total amount of the composition.

From the viewpoint of facilitating adjustment of the viscosity of the composition, or from the viewpoint of further enhancing the adhesiveness of the composition, the content of the additional polymerizable compound is preferably 30 parts by mass or more, 40 parts by mass or more, 50 parts by mass or more, 55 parts by mass or more, or 60 parts by mass or more, and may be, for example, 90 parts by mass or less, 80 parts by mass or less, 70 parts by mass or less, or 65 parts by mass or less, with respect to 100 parts by mass of the total content of polymerizable components.

The composition may further contain a polymerization initiator. The polymerization initiator may be, for example, a thermal polymerization initiator generating radicals by heat, or a photopolymerization initiator generating radicals by light. The polymerization initiator is preferably a thermal polymerization initiator.

When the composition contains a thermal polymerization initiator, a cured product of the composition can be obtained by adding heat to the composition. In this case, the composition may be a composition that is cured by heating preferably at 105°C or higher, more preferably 110°C or higher, and even more preferably 115°C or higher, and may be a composition that is cured by heating at, for example, 200°C or lower, 190°C or lower, or 180°C or lower. The heating time when heating the composition may be appropriately selected according to the composition of the composition so that the composition is suitably cured.

Examples of the thermal polymerization initiator include an azo compound and an organic peroxide. Examples of the azo compound include azobisisobutyronitrile, azobis-4-methoxy-2,4-dimethylvaleronitrile, azobiscyclohexanone-1-carbonitrile, and azodibenzoyl. Examples of the organic peroxide include benzoyl peroxide, lauroyl peroxide, di-t-butyl peroxide, di-t-hexyl peroxide, di-t-butyl peroxyhexahydroterephthalate, t-butyl peroxy-2-ethylhexanoate, 1,1-t-butyl peroxy-3,3,5-trimethylcyclohexane, and t-butyl peroxyisopropyl carbonate. Regarding the thermal polymerization initiator, these may be used singly or in combination of two or more kinds thereof.

When the composition contains a photopolymerization initiator, a cured product of the composition can be

obtained by, for example, irradiating the composition with light (for example, light containing at least a portion of wavelengths of 200 to 400 nm (ultraviolet light)). The conditions for light irradiation may be appropriately set according to the type of the photopolymerization initiator.

The photopolymerization initiator may be, for example, a benzoin ether-based photopolymerization initiator, an acetophenone-based photopolymerization initiator, an α-ketol-based photopolymerization initiator, an aromatic sulfonyl chloride-based photopolymerization initiator, a photoactive oxime-based photopolymerization initiator, a benzoin-based photopolymerization initiator, a benzil-based photopolymerization initiator, a benzophenone-based photopolymerization initiator, a ketal-based photopolymerization initiator, a thioxanthone-based photopolymerization initiator, or an acylphosphine oxide-based photopolymerization initiator.

Examples of the benzoin ether-based photopolymerization initiator include benzoin methyl ether, benzoin ethyl ether, benzoin propyl ether, benzoin isopropyl ether, benzoin isobutyl ether, 2,2-dimethoxy-1,2-diphenylethan-1-one (for example, "IRGACURE 651" manufactured by BASF), and anisole methyl ether. Examples of the acetophenone-based photopolymerization initiator include 1-hydroxycyclohexyl phenyl ketone (for example, "IRGACURE 184" manufactured by BASF), 4-phenoxydichloroacetophenone, 4-t-butyl dichloroacetophenone, 1-[4-(2-hydroxyethoxy)-phenyl]-2-hydroxy-2-methyl-1-propan-1-one (for example, "IRGACURE 2959" manufactured by BASF), 2-hydroxy-2-methyl-1-phenyl-propan-1-one (for example, "IRGACURE 1173" manufactured by BASF), and methoxyacetophenone.

Examples of the α-ketol-based photopolymerization initiator include 2-methyl-2-hydroxypropiophenone and 1-[4-(2-hydroxyethyl)-phenyl]-2-hydroxy-2-methylpropan-1-one. Examples of the aromatic sulfonyl chloride-based photopolymerization initiator include 2-naphthalenesulfonyl chloride. Examples of the photoactive oxime-based photopolymerization initiator include 1-phenyl-1,1-propanedione-2-(o-ethoxycarbonyl)-oxime.

Examples of the benzoin-based photopolymerization initiator include benzoin. Examples of the benzil-based photopolymerization initiator include benzil. Examples of the benzophenone-based photopolymerization initiator include benzophenone, benzoylbenzoic acid, 3,3'-dimethyl-4-methoxybenzophenone, polyvinylbenzophenone, and α-hydroxycyclohexyl phenyl ketone. Examples of the ketal-based photopolymerization initiator include benzyl dimethyl ketal. Examples of the thioxanthone-based photopolymerization initiator include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, isopropylthioxanthone, 2,4-diisopropylthioxanthone, and dodecylthioxanthone.

Examples of the acylphosphine oxide-based photopolymerization initiator include bis(2,6-dimethoxybenzoyl) phenylphosphine oxide, bis(2,6-dimethoxybenzoyl) (2,4,4-trimethylpentyl)phosphine oxide, bis(2,6-dimethoxybenzoyl)-n-butylphosphine oxide, bis(2,6-dimethoxybenzoyl)-(2-methylpropan-1-yl)phosphine oxide, bis(2,6-dimethoxybenzoyl)-(1-methylpropan-1-yl)phosphine oxide, bis(2,6-dimethoxybenzoyl)-t-butylphosphine oxide, bis(2,6-dimethoxybenzoyl)cyclohexylphosphine oxide, bis(2,6-dimethoxybenzoyl)octylphosphine oxide, bis(2-methoxybenzoyl) (2-methylpropan-1-yl)phosphine oxide, bis(2-methoxybenzoyl) (1-methylpropan-1-yl)phosphine oxide, bis(2,6-diethoxybenzoyl) (2-methylpropan-1-yl)phosphine oxide, bis(2,6-diethoxybenzoyl) (1-methylpropan-1-yl)phosphine oxide, bis(2,6-dibutoxybenzoyl) (2-methylpropan-1-yl)phosphine oxide, bis(2,4-dimethoxybenzoyl) (2-methylpropan-1-yl) phosphine oxide, bis(2,4,6-trimethylbenzoyl) (2,4-dipentoxyphenyl)phosphine oxide, bis(2,6-dimethoxybenzoyl)benzylphosphine oxide, bis(2,6-dimethoxybenzoyl)-2-phenylpropylphosphine oxide, bis(2,6-dimethoxybenzoyl)-2-phenylethylphosphine oxide, 2,6-dimethoxybenzoylbenzylbutylphosphine oxide, 2,6-dimethoxybenzoylbenzyloctylphosphine oxide, bis(2,4,6-trimethylbenzoyl)-2,5-diisopropylphenylphosphine oxide, bis(2,4,6-trimethylbenzoyl)-2-methylphenylphosphine oxide, bis(2,4,6-trimethylbenzoyl)-4-methylphenylphosphine oxide, bis(2,4,6-trimethylbenzoyl)-2,5-diethylphenylphosphine oxide, bis(2,4,6-trimethylbenzoyl)-2,3,5,6-tetramethylphenylphosphine oxide, bis(2,4,6-trimethylbenzoyl)-2,4-di-n-butoxyphenylphosphine oxide, 2,4,6-trimethylbenzoyldiphenylphosphine oxide, bis(2,6-dimethoxybenzoyl)-2,4,4-trimethylpentylphosphine oxide, bis(2,4,6-trimethylbenzoyl)isobutylphosphine oxide, 2,6-dimethoxybenzoyl-2,4,6-trimethylbenzoyl-n-butylphosphine oxide, bis(2,4,6-trimethylbenzoyl)phenylphosphine oxide, bis(2,4,6-trimethylbenzoyl)-2,4-dibutoxyphenylphosphine oxide, 1,10-bis[bis(2,4,6-trimethylbenzoyl)phosphine oxide]decane, and tri(2-methylbenzoyl)phosphine oxide.

Regarding the above-mentioned photopolymerization initiators, one kind thereof may be used alone, or two or more kinds thereof may be used in combination.

From the viewpoint of suitably carrying out polymerization, the content of the polymerization initiator is preferably 0.01 parts by mass or more, more preferably 0.05 parts by mass or more, even more preferably 0.1 parts by mass or more, and particularly preferably 0.5 parts by mass or more, with respect to 100 parts by mass of the total content of polymerizable components. From the viewpoint that the molecular weight of the polymer in a cured product of the composition is in a suitable range and at the same time, a decomposition product is suppressed, the content of the polymerization initiator is preferably 10 parts by mass or less, more preferably 5 parts by mass or less, and even more preferably 3 parts by mass or less, with respect to 100 parts by mass of the total content of polymerizable components.

The composition may further contain a thermally conductive filler. In this case, since the thermal conduction properties of the composition and a cured product thereof are improved, the composition can be suitably utilized as a thermally conductive material, a heat dissipation material, and the like. A thermally conductive filler refers to a filler having a

thermal conductivity of 10 W/m·K or greater.

The thermally conductive filler may be insulative or may be electrically conductive. The thermally conductive filler is preferably an insulative filler. Examples of the material constituting an insulative thermally conductive filler include aluminum oxide, aluminum hydroxide, magnesium oxide, beryllium oxide, boron nitride, aluminum nitride, silicon nitride, silicon carbide, silicon dioxide, aluminum fluoride, calcium fluoride, and zinc oxide. Examples of the material constituting an electrically conductive thermally conductive filler include aluminum, silver, and copper. The shape of the thermally conductive filler may be a spherical shape or may be a polyhedral body.

From the viewpoint that a cured product of the composition can be thinly disposed, the average particle size of the thermally conductive filler is preferably 50 μm or less, more preferably 40 μm or less, and even more preferably 30 μm or less, and the average particle size may be 0.05 μm or more, 0.1 μm or more, or 0.3 μm or more. The average particle size of the thermally conductive filler means the particle size at which the volume-based cumulative particle size distribution is 50% (D50) and is measured by using a laser diffraction type particle size distribution analyzer (for example, SALD-2300 (manufactured by SHIMADZU CORPORATION).

From the viewpoint of enhancing the thermal conduction properties of the composition, the content of the thermally conductive filler is preferably 60% by mass or more, more preferably 70% by mass or more, and even more preferably 80% by mass or more, and may be 97% by mass or less, 95% by mass or less, or 93% by mass or less, based on the total amount of the composition.

From the viewpoint of enhancing the thermal conduction properties of the composition, the content of the thermally conductive filler is preferably 65% by volume or more, more preferably 70% by volume or more, and even more preferably 75% by volume or more, and may be 90% by volume or less, 88% by volume or less, or 85% by volume or less, based on the total volume of the composition.

The composition may further contain a coupling agent. The coupling agent may be, for example, a silane coupling agent, a titanate coupling agent, or an aluminate coupling agent. The coupling agent is preferably a silane coupling agent.

The silane coupling agent may be a compound having an alkoxysilyl group such as a dialkoxysilyl group or a trialkoxysilyl group. The silane coupling agent may have, for example, an organic functional group or an alkyl group having 1 to 10 carbon atoms. Examples of the organic functional group include a vinyl group, a (meth)acryloyl group, an epoxy group, an amino group, a mercapto group, and an imidazole group. The silane coupling agent preferably has a (meth) acryloyl group. The above-mentioned coupling agents can be used singly or in combination of two or more kinds thereof.

From the viewpoint of reducing the viscosity of the composition and further increasing the breaking strength of the cured product, the content of the coupling agent is preferably 0.01 parts by mass or more, 0.02 parts by mass or more, or 0.025 parts by mass or more, with respect to 100 parts by mass of the content of the thermally conductive filler. Furthermore, the content of the coupling agent is preferably 2 parts by mass or less, 1.5 parts by mass or less, or 1 part by mass or less, with respect to 100 parts by mass of the content of the thermally conductive filler. It is because when the content of the coupling agent is too large, the coupling agent is likely to undergo self-condensation, and as a result, there is a possibility that an excessive increase in the breaking strength of the cured product, an increase in the tensile modulus, and an excessive decrease in the elongation at break may occur.

When the composition contains a coupling agent, it is preferable that the coupling agent is chemically adsorbed to the surface of the thermally conductive filler. In this case, the viscosity of the composition is reduced and the breaking strength of a cured product of the composition is further increased. Among the coupling agents contained in the composition, all of them may be chemically adsorbed to the surface of the thermally conductive filler, or a portion thereof may be chemically adsorbed to the surface of the thermally conductive filler.

Whether a coupling agent is chemically adsorbed to the surface of the thermally conductive filler can be checked by IR measurement (diffuse reflectance method) of the thermally conductive filler. Specifically, first, a solvent (for example, methyl ethyl ketone) is added to the composition to dissolve components other than the thermally conductive filler, such as polymerizable components, and then the thermally conductive filler is collected by filtration and vacuum dried. At this time, the thermally conductive filler is dried at a temperature below 100°C in order to prevent an unreacted coupling agent that is not chemically adsorbed to the surface of the thermally conductive filler from reacting. Next, the dried thermally conductive filler is added to excess methyl ethyl ketone (40 times or more the mass of the thermally conductive filler contained in the composition) and stirred, the mixture is left to stand at room temperature (20°C to 30°C) for 12 hours or longer, the thermally conductive filler is caused to settle, and then the supernatant (90% by mass or more of the added methyl ethyl ketone) is removed. It is believed that the coupling agent that is not chemically adsorbed to the surface of the thermally conductive filler is removed thereby. Then, the thermally conductive filler is dried in an oven at 100°C, and then IR measurement (diffuse reflectance method) of the thermally conductive filler is carried out. When the coupling agent is chemically adsorbed to the surface of the thermally conductive filler, peaks of a methoxy group, a methyl group, or a methylene chain originating from the coupling agent are observed in the range of 2800 to 3000 $cm^{-1}$.

Regarding a method for chemically adsorbing the coupling agent to the surface of the thermally conductive filler, for example, a method of first producing a liquid by hydrolyzing the coupling agent (hydrolyzed liquid), adding the hydrolyzed liquid to the thermally conductive filler, stirring the mixture, subsequently drying the thermally conductive filler,

pulverizing the thermally conductive filler as needed, and classifying the pulverization product, may be mentioned.

The composition may further contain a tackifier. Examples of the tackifier include a rosin-based resin and a terpene resin. The content of the tackifier may be 0.1 parts by mass or more, 1 part by mass or more, or 3 parts by mass or more, and may be 20 parts by mass or less, 15 parts by mass or less, 12 parts by mass or less, or 10 parts by mass or less, with respect to 100 parts by mass of the total content of polymerizable components.

The composition may further contain an antioxidant, from the viewpoint of improving the thermal reliability of a cured product of the composition. The antioxidant may be, for example, a phenol-based antioxidant, a benzophenone-based antioxidant, a benzoate-based antioxidant, a hindered amine-based antioxidant, or a benzotriazole-based antioxidant, and the antioxidant is preferably a phenol-based antioxidant.

A phenol-based antioxidant has, for example, a hindered phenol structure (hindered phenol ring). The hindered phenol structure (hindered phenol ring) may be, for example, a structure in which a t-butyl group is bonded to one or both of the positions ortho to the hydroxyl group on the phenol ring. The phenol-based antioxidant has, for example, one or more of such hindered phenol rings and preferably has two or more, more preferably three or more, and even more preferably four or more, hindered phenol rings.

The content of the antioxidant may be 0.1% by mass or more, 0.2% by mass or more, or 0.3% by mass or more, and may be 10% by mass or less, 9% by mass or less, 8% by mass or less, or 7% by mass or less, based on the total amount of the composition.

The composition can further contain additional additives as necessary. Examples of the additional additives include a surface treatment agent (excluding a coupling agent), a dispersant, a curing accelerator, a colorant, a crystal nucleating agent, a thermal stabilizer, a foaming agent, a flame retardant, a damping agent, a dehydrating agent, and a flame-retardant aid (for example, a metal oxide). The content of the additional additives may be 0.1% by mass or more and may be 30% by mass or less, based on the total amount of the composition.

The composition is preferably liquid at 25°C. Thereby, the composition can be suitably applied on the surface of an object such as a member serving as a heat source or a cooling member, and the adhesiveness to the coating surface can also be enhanced. The composition may also be solid at 25°C. In that case, it is preferable that the composition becomes liquid by heating (for example, at 50°C or higher).

[Composition set]

The above-mentioned composition may be in a state of a multi-liquid type composition (composition set). A composition set according to an embodiment is a composition set containing a first liquid containing an oxidizing agent and a second liquid containing a reducing agent. At least one of the first liquid and the second liquid contains the above-mentioned compound represented by the Formula (1). Furthermore, at least one of the first liquid and the second liquid contains the above-mentioned acrylic copolymer. By mixing the first liquid and the second liquid, the oxidizing agent and the reducing agent react with each other to generate free radicals, and polymerization of polymerizable components such as the compound represented by the Formula (1) proceeds. According to the composition set related to the present embodiment, when mixing the first liquid and the second liquid, a cured product of a mixture of the first liquid and the second liquid can be obtained immediately. That is, according to the composition set, a cured product of the composition is obtained at a rapid rate.

In the composition set, preferably, the first liquid contains an oxidizing agent, a compound represented by the Formula (1), and an acrylic copolymer, and the second liquid contains a reducing agent, a compound represented by the Formula (1), and an acrylic copolymer.

The content of the compound represented by the Formula (1) based on the total amount of the liquids constituting the composition set (for example, in a case of a two-liquid type composition set, the total amount of the first liquid and the second liquid) may be the same as the above-mentioned range of the content of the compound represented by the Formula (1) based on the total amount of the composition. The same also applies to the content of the acrylic copolymer contained in the composition set.

The oxidizing agent contained in the first liquid has a role as a polymerization initiator (radical polymerization initiator). The oxidizing agent may be, for example, an organic peroxide or an azo compound. The organic peroxide may be, for example, a hydroperoxide, a peroxydicarbonate, a peroxy ester, a peroxy ketal, a dialkyl peroxide, or a diacyl peroxide. The azo compound may be AIBN (2,2'-azobisisobutyronitrile), V-65 (azobisdimethylvaleronitrile), or the like. Regarding the oxidizing agent, one kind thereof can be used alone, or two or more kinds thereof can be used in combination.

Examples of the hydroperoxide include diisopropylbenzene hydroperoxide and cumene hydroperoxide.

Examples of the peroxydicarbonate include di-n-propyl peroxydicarbonate, diisopropyl peroxydicarbonate, bis(4-t-butylcyclohexyl) peroxydicarbonate, di-2-ethoxymethoxy peroxydicarbonate, di(2-ethylhexylperoxy) dicarbonate, dimethoxybutyl peroxydicarbonate, and di(3-methyl-3-methoxybutylperoxy) dicarbonate.

Examples of the peroxy ester include cumyl peroxyneodecanoate, 1,1,3,3-tetramethylbutyl peroxyneodecanoate, 1-cyclohexyl 1-methylethyl peroxyneodecanoate, t-hexyl peroxyneodecanoate, t-butyl peroxypivalate, 1,1,3,3-tetramethylbutyl peroxy-2-ethylhexanonate, 2,5-dimethyl-2,5-di(2-ethylhexanoylperoxy)hexane, 1-cyclohexyl-1-methylethyl peroxy-2-ethylhexanonate, t-hexyl peroxy-2-ethylhexanonate, t-butyl peroxy-2-ethylhexanonate, t-butyl peroxyisobutyrate, 1,1-bis(t-butylperoxy)cyclohexane, t-butyl peroxy-3,5,5-trimethylhexanonate, t-butyl peroxylaurate, 2,5-dimethyl-2,5-di(m-toluoylperoxy)hexane, t-hexyl peroxybenzoate, and t-butyl peroxyacetate.

Examples of the peroxy ketal include 1,1-bis(t-hexylperoxy)-3,3,5-trimethylcyclohexane, 1,1-bis(t-hexylperoxy) cyclohexane, 1,1-bis(t-butylperoxy)-3,3,5-trimethylcyclohexane, 1,1-bis(t-butylperoxy)cyclododecane, and 2,2-bis(t-butylperoxy)decane.

Examples of the dialkyl peroxide include α,α'-bis(t-butylperoxy)diisopropylbenzene, dicumyl peroxide, 2,5-dimethyl-2,5-di(t-butylperoxy)hexane, and t-butylcumyl peroxide.

Examples of the diacyl peroxide include isobutyl peroxide, 2,4-dichlorobenzoyl peroxide, 3,5,5-trimethylhexanoyl peroxide, octanoyl peroxide, lauroyl peroxide, stearoyl peroxide, succinic peroxide, benzoylperoxytoluene, and benzoyl peroxide.

From the viewpoint of storage stability, the oxidizing agent is preferably a peroxide, more preferably a hydroperoxide, and even more preferably cumene hydroperoxide.

The content of the oxidizing agent may be 0.1% by mass or more, 0.5% by mass or more, or 1% by mass or more, and may be 10% by mass or less, 5% by mass or less, or 3% by mass or less, based on the total amount of the liquids constituting the composition set.

The reducing agent contained in the second liquid may be, for example, a tertiary amine, a thiourea derivative, or a transition metal salt. Examples of the tertiary amine include triethylamine, tripropylamine, tributylamine, and N,N-dimethyl-para-toluidine. Examples of the thiourea derivative include 2-mercaptobenzimidazole, methylthiourea, dibutylthiourea, tetramethylthiourea, and ethylenethiourea. Examples of the transition metal salt include cobalt naphthenate, copper naphthenate, and vanadyl acetylacetonate. Regarding the reducing agent, one kind thereof can be used alone, or two or more kinds thereof can be used in combination.

The reducing agent is preferably a thiourea derivative or a transition metal salt, from the viewpoint of having an excellent curing rate. The thiourea derivative may be, for example, ethylene thiourea. From the same viewpoint, the transition metal salt is preferably vanadyl acetylacetonate.

The content of the reducing agent may be 0.05% by mass or more, 0.1% by mass or more, or 0.3% by mass or more, and may be 5% by mass or less, 3% by mass or less, or 1% by mass or less, based on the total amount of the liquids constituting the composition set.

The composition set may further contain an ester-based thixotropy-imparting agent, a compound represented by the Formula (2), a compound represented by the Formula (3), an additional polymerizable compound, and additives, all of which can be used for the above-mentioned composition. Examples of the additives that can be used for the above-mentioned composition include a coupling agent, a tackifier, an antioxidant, and additional additives. Furthermore, the composition set may further contain a thermally conductive filler that can be used for the above-mentioned composition, and may have a coupling agent chemically adsorbed to the surface of the thermally conductive filler. These components may be contained in one or both of the first liquid and the second liquid or may be contained in a third liquid different from the first liquid and the second liquid. The contents of these components based on the total amount of the liquids constituting the composition set may be the same as the above-mentioned ranges of the contents of these components based on the total amount of the composition.

Since the cured products of the above-mentioned composition and composition set have thermal conduction properties and excellent breaking strength, the composition and the composition set are suitable for use applications such as a thermally conductive material (also referred to as heat dissipation material), an adhesive, a die attach material, a structural bonding adhesive, a binder for batteries, a stress relieving agent, a sealing agent, a coating agent, and a paint. Similarly, a cured product of the above-mentioned composition and a cured product of a mixture of the composition set have excellent breaking strength, and are therefore suitable for each of the above-described use applications. When the composition and the composition set contain a thermally conductive filler, the composition, the composition set, and cured products thereof are particularly suitably used as thermally conductive materials (also referred to as heat dissipation materials). In addition, when a coupling agent is chemically adsorbed to the surface of the thermally conductive filler, the composition and the composition set are particularly suitable for the above-described use applications because they have low viscosity and the cured products thereof have high breaking strength.

[Article]

Subsequently, an article containing a cured product of the above-mentioned composition or composition set (hereinafter, also simply referred to as "cured product") will be described. An article according to an embodiment contains a heat source and a cured product in thermal contact with the heat source. Hereinafter, as a more specific example of the article, an electronic component will be taken as an example and described. FIG. 1 is a schematic cross-sectional view

illustrating an embodiment of an electronic component containing a cured product. The electronic component 1A shown in FIG. 1 contains a semiconductor chip 21 as a heat source and a heat sink 22 as a heat dissipation part.

The electronic component 1A contains a cured product 11 provided between the semiconductor chip 21 and the heat sink 22. The cured product 11 is a cured product of the above-mentioned composition, or a cured product of a mixture of the composition set.

Since the cured product 11 has thermal conduction properties, the cured product 11 works as a thermally conductive material (thermal interface material) for the electronic component 1A, and heat is transferred from the semiconductor chip 21 to the heat sink 22. Then, heat is dissipated to the outside from the heat sink 22.

Since the cured product 11 has excellent heat resistance, deterioration of the cured product 11 caused by heat is suppressed. Therefore, the heat generated from the semiconductor chip 21 can be effectively transferred to the heat sink 22.

The cured product 11 can also be obtained by disposing a liquid composition (or composition set) between the semiconductor chip 21 and the heat sink 22 and then curing the composition (or composition set). For that reason, generation of voids by dripping and the pump-out phenomenon can be suppressed, and as a result, excellent adhesiveness of the cured product 11 (adhesiveness to the surfaces of the semiconductor chip 21 and the heat sink 22) can be obtained. Incidentally, the curing means and curing conditions for the composition may be adjusted according to the composition of the composition, or the type of the polymerization initiator.

In the electronic component 1A explained in FIG. 1, the cured product 11 is disposed to be in direct contact with the semiconductor chip 21 and the heat sink 22; however, it is acceptable as long as the cured product 11 is in thermal contact with a heat source, and in another embodiment, the cured product 11 may be disposed to be in contact with a heat source (for example, semiconductor chip), with another member interposed therebetween.

FIG. 2 is a schematic cross-sectional view illustrating another embodiment of the electronic component containing a cured product. The electronic component 1B shown in FIG. 2 is a processor containing, on one surface of a substrate 23, a semiconductor chip 21 as a heat source disposed with an underfill 24 interposed therebetween, a heat sink 22 as a heat dissipation part, and a heat spreader 25 provided between the semiconductor chip 21 and the heat sink 22. Between the semiconductor chip 21 and the heat spreader 25, a first cured product **11** provided to be in contact with the semiconductor chip 21 is provided. Between the heat spreader 25 and the heat sink 22, a second cured product **11** is provided.

The substrate 23, underfill 24, and heat spreader 25 may be formed from materials that are generally used in the art. For example, the substrate 23 may be a laminated substrate or the like, the underfill 24 may be formed from a resin such as an epoxy resin, or the like, and the heat spreader 25 may be a metal plate or the like.

The first cured product 11 and the second cured product 11 are cured products of the above-mentioned curable composition or cured products of a mixture of the above-mentioned curable composition set. The first cured product **11** is in direct contact with the semiconductor chip 21 as a heat source, while the second cured product **11** is in thermal contact with the semiconductor chip 21 as a heat source, with the first cured product **11** and the heat spreader 25 interposed therebetween.

Since the first cured product 11 and the second cured product 11 have thermal conduction properties, the first cured product **11** and the second cured product **11** work as thermally conductive materials (thermal interface materials) for the electronic component 1B. That is, the first cured product 11 promotes heat transfer from the semiconductor chip 21 to the heat spreader 25. Furthermore, the second cured product 11 promotes heat transfer from the heat spreader 25 to the heat sink 22. Then, heat is dissipated to the outside from the heat sink 22.

Since the first cured product 11 and the second cured product 11 also have excellent heat resistance, deterioration of the first cured product 11 and the second cured product 11 caused by heat is suppressed. Therefore, the heat generated from the semiconductor chip 21 can be transferred more effectively to the heat spreader 25, and the heat can be transferred more effectively to the heat sink 22.

The first cured product 11 and the second cured product 11 can also be obtained by disposing a liquid composition (composition set) between the semiconductor chip 21 and the heat spreader 25 or between the heat spreader 25 and the heat sink 22, and then curing the composition (composition set). For that reason, also for the electronic component 1B, generation of voids by dripping and the pump-out phenomenon of the composition (composition set) can be suppressed, and as a result, excellent adhesiveness of the first cured product 11 and the second cured product 11 (adhesiveness to the surfaces of the semiconductor chip 21, heat spreader 25, and/or heat sink 22) can be obtained.

## Examples

Hereinafter, the present invention will be described more specifically based on Examples. The present invention is not intended to be limited to these Examples.

In Examples and Comparative Examples, each of the following components was used.

(A) A compound represented by the following Formula (1-5) synthesized by the procedure shown below (weight average molecular weight: 16000, mixture in which m in the Formula (1-5) is an integer of approximately 246 ± 5 and n is an integer of approximately 105 ± 5, viscosity at 25°C: 55 Pa·s)

[Chemical Formula 14]

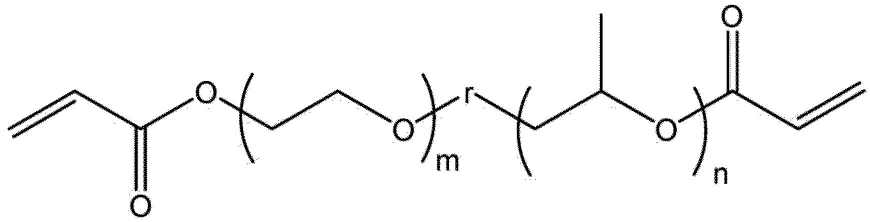

(1-5)

In the Formula (1-5), -r- is a symbol representing random copolymerization.

(B) N-acryloylmorpholine represented by the following Formula (2-2) ("ACMO" manufactured by KJ Chemicals Corporation)

[Chemical Formula 15]

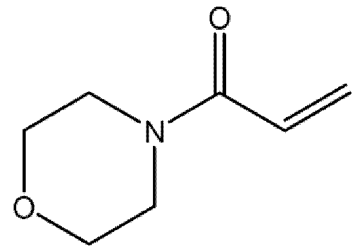

(2-2)

(C) A compound represented by the following Formula (3-3) ("RC200C" manufactured by KANEKA CORPORATION, weight average molecular weight: 18000, a compound in which $R^{31}$ and $R^{32}$ in the Formula (3-3) are each a hydrogen atom or a methyl group and $R^{34}$ is a polar group, viscosity at 23°C: 530 Pa·s, Tg: -39°C)

[Chemical Formula 16]

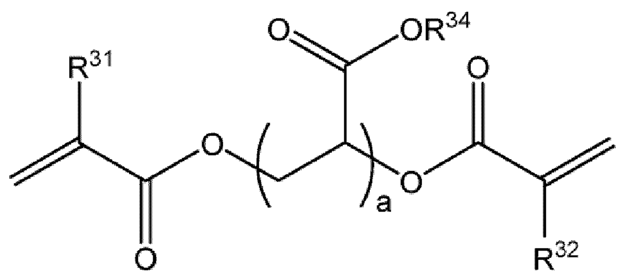

(3-3)

(D-1) 2-Ethylhexyl acrylate ("AEH" manufactured by NIPPON SHOKUBAI CO., LTD.)

(D-2) Isodecyl acrylate ("FA111A" manufactured by Showa Denko Materials Co., Ltd.)
(D-3) 4-Hydroxybutyl acrylate (manufactured by OSAKA ORGANIC CHEMICAL INDUSTRY LTD.)
(D-4) 2-Acryloyloxyethyl succinate ("NK ESTER A-SA" manufactured by SHIN-NAKAMURA CHEMICAL Co., Ltd.)
(E-1) A triblock copolymer in which a polymethyl methacrylate block, a poly-n-butyl acrylate block, and a polymethyl methacrylate block are bonded in this order ("KURARITY (registered trademark) LA2270" manufactured by Kuraray Co., Ltd., the content of methyl methacrylate based on the total amount of the monomer units: 40% by mass, weight average molecular weight: about 50000)
(E-2) A triblock copolymer in which a polymethyl methacrylate block, a poly n-butyl acrylate block, and a polymethyl methacrylate block are bonded in this order ("KURARITY (registered trademark) LA2250" manufactured by Kuraray Co., Ltd., the content of methyl methacrylate based on the total amount of the monomer units: 30% by mass, weight average molecular weight: about 46000)
(e-1) A triblock copolymer in which a polymethyl methacrylate block, a poly n-butyl acrylate block, and a polymethyl methacrylate block are bonded in this order ("KURARITY (registered trademark) LA2140" manufactured by Kuraray Co., Ltd., the content of methyl methacrylate based on the total amount of the monomer units: 20% by mass, weight average molecular weight: about 47000)
(F-1) Ester-based thixotropy-imparting agent ("DISPARLON 3500" manufactured by Kusumoto Chemicals, Ltd., polyether phosphate ester)
(F-2) Ester-based thixotropy-imparting agent ("FLOWNON RCM100" manufactured by Kyoeisha Chemical Co., Ltd., main component: fatty acid esters and aromatic esters)
(G) Tackifier ("TACKIFIER KE311" manufactured by ARAKAWA CHEMICAL INDUSTRIES, LTD.)
(H) Phenol-based antioxidant ("Irganox 1010" manufactured by BASF Japan Ltd.)
(I-1) Filler made of alumina ("ADVANCED ALUMINA AA-18" manufactured by SUMITOMO CHEMICAL COMPANY, LIMITED)
(I-2) Filler made of alumina ("ALUMINA BEADS CB-A30S" manufactured by Showa Denko K.K.)
(I-3) Filler made of alumina ("ADVANCED ALUMINA AA-3" manufactured by SUMITOMO CHEMICAL COMPANY, LIMITED)
(I-4) Filler made of alumina ("ADVANCED ALUMINA AA-04" manufactured by SUMITOMO CHEMICAL COMPANY, LIMITED)
(J-1) Silane coupling agent represented by the following Formula (4-1) ("KBM-5803" manufactured by Shin-Etsu Chemical Co., Ltd.)

[Chemical Formula 17]

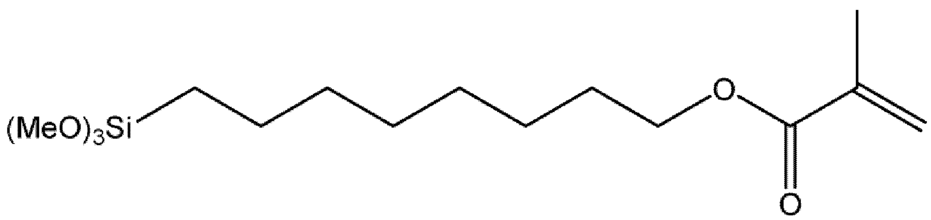

(4-1)

(J-2) Silane coupling agent represented by the following Formula (4-2) ("KBM3103C" manufactured by Shin-Etsu Chemical Co., Ltd.)

[Chemical Formula 18]

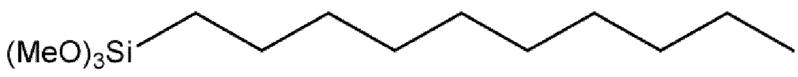

(4-2)

[Synthesis of compound represented by the Formula (1-5)]

A 500-mL flask composed of a stirrer, a thermometer, a nitrogen gas inlet tube, a discharge tube, and a heating jacket was used as a reactor. 240 g of polyoxyethylene polyoxypropylene glycol (molecular weight 16000) and 300 g of toluene were added to the reactor, the mixture was stirred at 45°C at a speed of stirring rotation of 250 times/min, nitrogen was allowed to flow at a rate of 100 mL/min, and the mixture was stirred for 30 minutes. Subsequently, the temperature was lowered to 25°C, after completion of temperature lowering, 2.9 g of acryloyl chloride was added dropwise to the reactor, and the mixture was stirred for 30 minutes. Subsequently, 3.8 g of triethylamine was added dropwise, and the mixture was

stirred for 2 hours. Subsequently, the temperature was raised to 45°C, and the mixture was reacted for 2 hours. The reaction liquid was filtered, the filtrate was desolvated, and a compound represented by the Formula (1-5) was obtained.

[Production of composition]

The components were mixed at the blending ratio indicated in Table 1, and each of the compositions of Examples and Comparative Examples were obtained. Incidentally, the mixed filler in Table 1 is a mixture of the above-described thermally conductive fillers (I-1) to (I-4) in a mass ratio of (I-1) : (I-2) : (I-3) : (I-4) = 33 : 33 : 24 : 10. The mixed filler was subjected to a surface treatment with coupling agents (J-1) and (J-2) before being mixed with the other components. For the surface treatment, 0.025 parts by mass of the coupling agent (J-1) and 0.025 parts by mass of the coupling agent (J-2) were used with respect to 100 parts by mass of the mixed filler. A specific method of the surface treatment is as follows.

The above-described mixed filler was introduced into a 10-L planetary mixer (the inner wall and the stirring blade were made of stainless steel), the content was stirred at a speed of rotation of 200 rpm to 500 rpm for 10 minutes, subsequently a hydrolyzed liquid of a coupling agent prepared by the method that will be described below was introduced therein, and the mixture was stirred at a speed of rotation of 200 rpm to 500 rpm for 10 minutes. Subsequently, the mixture was transferred into a vat, dried in an oven at 120°C for 8 hours, pulverized as necessary, and classified, and a thermally conductive filler after the surface treatment was obtained.

A method for producing a hydrolyzed liquid for a coupling agent is as follows. A 0.1 mol/L aqueous solution of acetic acid, methanol, and a coupling agent (J-1) were blended in a beaker at a blending ratio of 38% by mass of the aqueous solution of acetic acid, 56% by mass of methanol, and 6% by mass of the coupling agent, and the mixture was stirred and mixed at 50°C for 1 hour. The obtained mixed liquid was cooled, subsequently methanol and a coupling agent (J-2) were further blended therein, and the mixture was stirred and mixed at 25°C for 10 minutes to produce a hydrolyzed liquid. The hydrolyzed liquid of the coupling agent was added to the mixed filler within 30 minutes after production.

The ratio of the volume of the mixed filler after the surface treatment to the total volume of the other components (total volume of the other components : volume of the mixed filler) was 25 : 75.

Incidentally, in the case where (e-1) was used instead of (E-1) or (E-2), turbidity was generated during the production of the composition, and the production of the composition and the production and evaluation of the cured product described below could not be performed.

[Production of cured product]

The composition of each Examples was charged into a mold form (made of SUS plates) having a size of 10 cm × 10 cm × 0.2 mm, the mold form was covered with a SUS plate, the composition was heated for 15 minutes under the conditions of 135°C to be cured, and thereby a cured product having a thickness of 0.2 mm was obtained.

[Measurement of breaking strength, elongation at break, and tensile modulus]

The elongation at break, the tensile modulus, and the breaking strength of the cured product at 25°C were measured by using a tensile tester ("Autograph EZ-TEST EZ-S" manufactured by SHIMADZU CORPORATION). Regarding the measurement, measurement was performed based on JIS K7161 for a cured product having a shape of 0.2 mm (thickness) × 5 mm (width) × 30 mm (length), under the conditions of a distance between chucks of 20 mm and a tensile rate of 5 mm/min.

[Measurement of thermal conductivity]

The cured product was cut into a square of 10 mm × 10 mm × 0.2 mm and subjected to a blackening treatment with a graphite spray, and then the thermal diffusivity under the conditions of 25°C was measured by a xenon flash method ("LFA447 nanoflash" manufactured by NETZSCH-Geratebau GmbH, Selb/Bayern). From the product of this value, the density measured by the Archimedean method, and the specific heat at 25°C measured with a differential scanning calorimeter ("DSC250" manufactured by TA Instruments, Inc.), the thermal conductivity in the thickness direction of the cured product was determined based on the following formula.

$$\text{Thermal conductivity } \lambda \text{ (W/(m·K))} = \alpha \times \rho \times Cp$$

$\alpha$: Thermal diffusivity ($m^2/s$)
$\rho$: Density ($kg/cm^3$)
Cp: Specific heat (capacity) (kJ/(kg·K))

[Evaluation of heat resistance]

The cured product was cut into a size of 3 cm × 3 cm, the weight (initial weight) was measured, subsequently the cured product was placed in a constant temperature bath at 150°C and taken out after 1000 hours or 1500 hours, and the weight (weight after 1000 hours or weight after 1500 hours) was measured again. The amount of weight loss was determined by the following formula.

Amount of weight loss after 1000 hours (%) = (Weight after 1000 hours/initial weight) × 100

Amount of weight loss after 1500 hours (%) = (Weight after 1500 hours/initial weight) × 100

For the compositions and cured products of Examples and Comparative Examples, the measurement results for each physical property are shown in Table 1.

[Table 1]

<table>
<tr><th colspan="3"></th><th>Comparative Example 1</th><th>Example 1</th><th>Example 2</th><th>Example 3</th><th>Example 4</th></tr>
<tr><td rowspan="15">Blending ratio (parts by mass)</td><td rowspan="7">Polymerizable components</td><td>(A)</td><td>21.1</td><td>21.8</td><td>22.3</td><td>21.8</td><td>21.8</td></tr>
<tr><td>(B)</td><td>10.3</td><td>10.6</td><td>10.9</td><td>10.6</td><td>10.6</td></tr>
<tr><td>(C)</td><td>6.2</td><td>6.4</td><td>6.5</td><td>6.4</td><td>6.4</td></tr>
<tr><td>(D-1)</td><td>-</td><td>-</td><td>-</td><td>-</td><td>13.8</td></tr>
<tr><td>(D-2)</td><td>56.2</td><td>55.3</td><td>54.3</td><td>55.3</td><td>41.5</td></tr>
<tr><td>(D-3)</td><td>6.1</td><td>5.7</td><td>5.9</td><td>5.7</td><td>5.7</td></tr>
<tr><td>(D-4)</td><td>0.1</td><td>0.1</td><td>0.1</td><td>0.1</td><td>0.1</td></tr>
<tr><td colspan="2">Total polymerizable components</td><td>100</td><td>100</td><td>100</td><td>100</td><td>100</td></tr>
<tr><td rowspan="2">Acrylic copolymer</td><td>(E-1)</td><td>-</td><td>3.2</td><td>5.4</td><td>-</td><td>3.2</td></tr>
<tr><td>(E-2)</td><td>-</td><td>-</td><td>-</td><td>3.2</td><td>-</td></tr>
<tr><td rowspan="2">Thixotropy-imparting agent</td><td>(F-1)</td><td>-</td><td>-</td><td>-</td><td>-</td><td>-</td></tr>
<tr><td>(F-2)</td><td>-</td><td>-</td><td>-</td><td>-</td><td>-</td></tr>
<tr><td>Tackifier</td><td>(G)</td><td>3.1</td><td>3.2</td><td>3.3</td><td>3.2</td><td>3.2</td></tr>
<tr><td>Antioxidant</td><td>(H)</td><td>5.2</td><td>6.4</td><td>6.5</td><td>6.4</td><td>6.4</td></tr>
<tr><td colspan="2">Mixed filler</td><td>1450.7</td><td>1497.0</td><td>1529.6</td><td>1497.0</td><td>1497.0</td></tr>
<tr><td rowspan="6">Physical properties of the cured product</td><td colspan="2">Breaking strength (MPa)</td><td>1.3</td><td>1.6</td><td>1.8</td><td>1.7</td><td>1.6</td></tr>
<tr><td colspan="2">Elongation at break (%)</td><td>32.1</td><td>39.2</td><td>40.0</td><td>34.6</td><td>36.5</td></tr>
<tr><td colspan="2">Tensile modulus (MPa)</td><td>17.2</td><td>22.0</td><td>23.1</td><td>24.5</td><td>20.2</td></tr>
<tr><td colspan="2">Thermal conductivity (W/(m·K))</td><td>4.1</td><td>4.0</td><td>4.1</td><td>4.0</td><td>4.0</td></tr>
<tr><td colspan="2">Heat resistance (amount of weight loss after 1000 hours (%))</td><td>0.84</td><td>0.56</td><td>0.52</td><td>0.71</td><td>0.61</td></tr>
<tr><td colspan="2">Heat resistance (amount of weight loss after 1500 hours (%))</td><td>1.98</td><td>1.34</td><td>1.20</td><td>1.37</td><td>1.60</td></tr>
</table>

(continued)

| | | | Example 5 | Example 6 | Example 7 | Example 8 |
|---|---|---|---|---|---|---|
| Blending ratio (parts by mass) | Polymerizable components | (A) | 21.8 | 21.8 | 21.8 | 21.6 |
| | | (B) | 10.6 | 10.6 | 10.6 | 10.5 |
| | | (C) | 6.4 | 6.4 | 6.4 | 6.3 |
| | | (D-1) | 27.7 | 55.3 | 13.8 | 13.7 |
| | | (D-2) | 27.7 | - | 41.4 | 42.1 |
| | | (D-3) | 5.7 | 5.7 | 5.8 | 5.7 |
| | | (D-4) | 0.1 | 0.1 | 0.1 | 0.1 |
| | Total polymerizable components | | 100 | 100 | 100 | 100 |
| | Acrylic copolymer | (E-1) | 3.2 | 3.2 | 3.2 | 2.1 |
| | | (E-2) | - | - | - | - |
| | Thixotropy-imparting agent | (F-1) | - | - | 1.1 | - |
| | | (F-2) | - | - | - | 1.1 |
| | Tackifier | (G) | 3.2 | 3.2 | 3.2 | 3.2 |
| | Antioxidant | (H) | 6.4 | 6.4 | 6.4 | 6.3 |
| | Mixed filler | | 1497.0 | 1497.0 | 1495.4 | 1481.3 |
| Physical properties of the cured product | Breaking strength (MPa) | | 1.6 | 1.6 | 1.6 | 1.6 |
| | Elongation at break (%) | | 30.3 | 34.8 | 33.4 | 27.2 |
| | Tensile modulus (MPa) | | 23.4 | 21.2 | 25.6 | 26.2 |
| | Thermal conductivity (W/(m·K)) | | 4.0 | 4.2 | 4.0 | 4.1 |
| | Heat resistance (amount of weight loss after 1000 hours (%)) | | 0.55 | 0.55 | 0.66 | 0.78 |
| | Heat resistance (amount of weight loss after 1500 hours (%)) | | 1.21 | 1.09 | 0.93 | 1.90 |

## Reference Signs List

1A, 1B: electronic component, 11: cured product of composition, 21: semiconductor chip (heat source), 22: heat sink, 23: substrate, 24: underfill, 25: heat spreader.

## Claims

**1.** A composition comprising:

a compound represented by the following Formula (1):

[Chemical Formula 1]

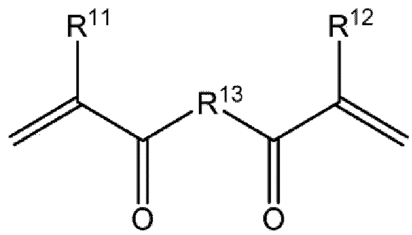

(1)

[in the Formula (1), $R^{11}$ and $R^{12}$ each independently represent a hydrogen atom or a methyl group; and $R^{13}$ represents a divalent group having a polyoxyalkylene chain]; and
a copolymer comprising methyl (meth)acrylate and an alkyl (meth)acrylate having an alkyl group having 2 to 12 carbon atoms,
wherein a content of methyl (meth)acrylate is 25% by mass or more based on a total amount of monomer units comprised in the copolymer.

**2.** The composition according to claim 1, further comprising a thermally conductive filler.

**3.** The composition according to claim 1 or 2, further comprising a compound represented by the following Formula (2):

[Chemical Formula 2]

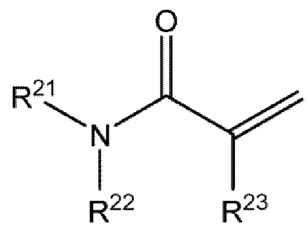

(2)

[in the Formula (2), $R^{21}$ and $R^{22}$ each independently represent a hydrogen atom or a monovalent organic group, and may be bonded to each other to form a ring; and $R^{23}$ represents a hydrogen atom or a methyl group].

**4.** The composition according to claim 1 or 2, further comprising a compound represented by the following Formula (3):

[Chemical Formula 3]

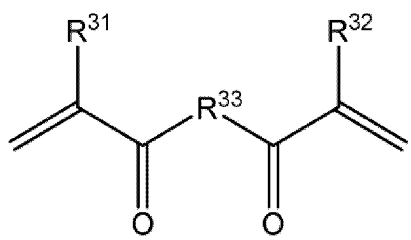

(3)

[in the Formula (3), $R^{31}$ and $R^{32}$ each independently represent a hydrogen atom or a methyl group; and $R^{33}$ represents a divalent group having a poly(meth)acrylate chain].

**5.** A cured product of the composition according to claim 1 or 2.

**6.** An article comprising:

a heat source; and
the cured product according to claim 5 in thermal contact with the heat source.

***Fig.1***

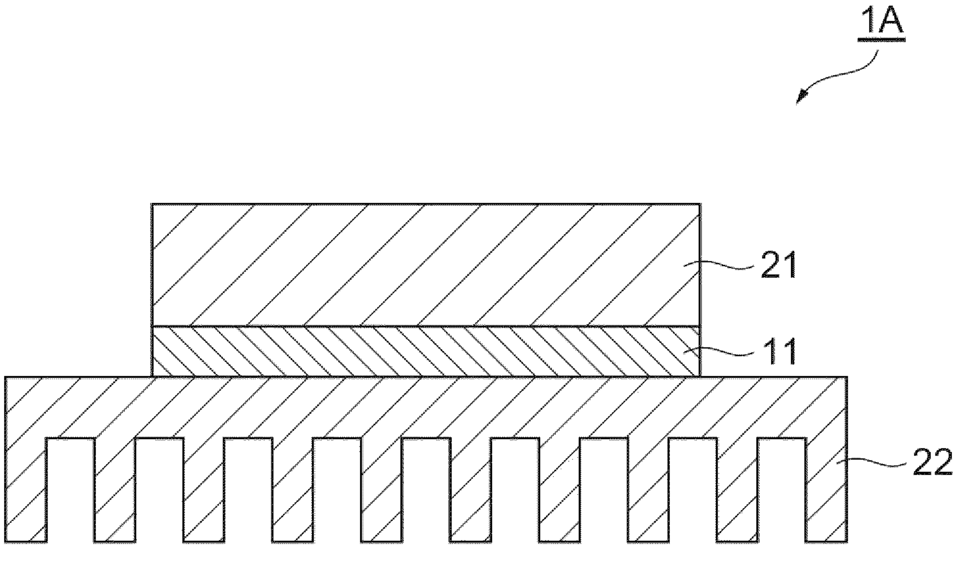

*Fig.2*

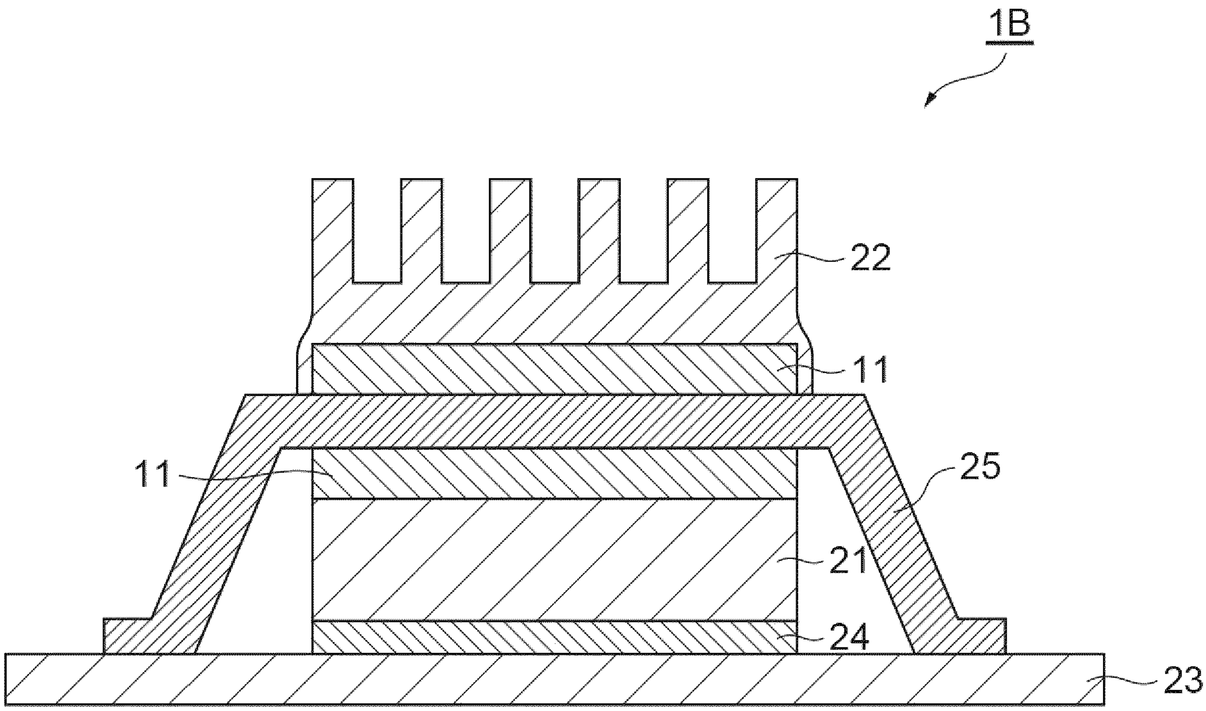

**INTERNATIONAL SEARCH REPORT**

International application No.
**PCT/JP2023/017982**

**A. CLASSIFICATION OF SUBJECT MATTER**

***C08F 290/06***(2006.01)i
FI: C08F290/06

According to International Patent Classification (IPC) or to both national classification and IPC

**B. FIELDS SEARCHED**

Minimum documentation searched (classification system followed by classification symbols)

C08F290/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | WO 2011/048802 A1 (KURARAY MEDICAL INC.) 28 April 2011 (2011-04-28) claims, paragraph [0037], examples | 1-3, 5<br>4, 6 |
| X<br>A | JP 2013-203977 A (DAINIPPON PRINTING CO., LTD.) 07 October 2013 (2013-10-07) claims, examples | 1, 5<br>2-4, 6 |
| X<br>A | JP 2018-111796 A (AICA KOGYO CO., LTD.) 19 July 2018 (2018-07-19) claims, examples | 1, 3, 5<br>2, 4, 6 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 July 2023** | **01 August 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/017982**

| Patent document cited in search report | Publication date (day/month/year) | Patent family member(s) | Publication date (day/month/year) |
|---|---|---|---|
| WO 2011/048802 A1 | 28 April 2011 | US 2015/0126641 A1<br>claims, paragraph [0043], examples<br>EP 2492289 A1<br>CN 102648216 A | |
| JP 2013-203977 A | 07 October 2013 | (Family: none) | |
| JP 2018-111796 A | 19 July 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2021107001 A